# EUROPÄISCHE PATENTSCHRIFT

(11) **EP 3 674 119 B1**
(45) Veröffentlichungstag und Bekanntmachung des Hinweises auf die Patenterteilung: **10.11.2021**
(21) Anmeldenummer: 19219111.2
(22) Anmeldetag: 20.12.2019
(51) Int. Cl.: B60J 7/12, B60J 7/185

(54) **SOFT-TOP-VERDECK FÜR EIN CABRIOLET-FAHRZEUG MIT EINEM STOFFHALTEBÜGEL**
SOFT TOP FOR A CABRIOLET VEHICLE WITH A FABRIC RETAINING BRACKET
CAPOTE SOFT-TOP POUR VÉHICULE CABRIOLET DOTÉ D'UN ÉTRIER DE RETENUE

(30) Priorität: 31.12.2018 DE 102018133720
(43) Veröffentlichungstag der Anmeldung: 01.07.2020
(73) Patentinhaber: Valmet Automotive Oy, 23500 Uusikaupunki (FI)
(72) Erfinder: Kreiling, Nils, 49080 Osnabrück (DE); Hollenbeck, Sven, 49492 Westerkappeln (DE); Stölting, Maik, 49565 Bramsche (DE)
(74) Vertreter: Kronthaler, Schmidt & Coll.

(56) Entgegenhaltungen:
- EP-A2- 2 098 398
- DE-A1-102010 007 731
- DE-U1-202011 101 129

## Beschreibung

Die Erfindung betrifft ein Soft-Top-Verdeck für ein Cabriolet-Fahrzeug, das mittels eines Verdeckgestänges zwischen einer einen Fahrgastraum zumindest bereichsweise freigebenden offenen Position und einer den Fahrgastraum abdeckenden geschlossenen Position verlagerbar ist, nach der im Oberbegriff des Patentanspruches 1 näher definierten Art.

Aus der Praxis sind Cabriolet-Fahrzeuge mit verlagerbaren Verdecken bekannt, bei denen das Verdeck mittels eines einen Hauptlenker und eine Hauptsäule umfassenden Hauptviergelenkmechanismus zwischen einer geschlossenen Position und einer offenen Position verlagerbar ist. Die Hauptsäule und der Hauptlenker sind neben der karosseriefesten Anlenkung an einem Hauptlager an einem in geschlossener Verdeckposition fahrzeugfrontseitig der Hauptsäule angeordneten Dachrahmen angelenkt, der Teil des Hauptviergelenkmechanismus ist. Weiterhin ist ein Stoffhaltebügel zum Spannen eines Verdeckbezugs vorgesehen, der bei geschlossenem Verdeck unabhängig von dem Hauptviergelenkmechanismus von einer den Verdeckbezug spannenden Position, in der der Stoffhaltebügel insbesondere auf einem Verdeckkastendeckel und/oder Heckdeckel aufliegt, und einer mit einem heckseitigen Bereich nach oben aufgeschwenkten offenen Position verlagerbar ist.

Ein derartiges Verdeck ist beispielsweise in der EP 2 098 398 A2 beschrieben.

Aufgrund von verstärkt angewandten Leichtbaumaßnahmen zur größtmöglichen Gewichtsreduzierung ist bei derartig ausgeführten Verdecken eine gewünschte Steifigkeit des Verdecks in geschlossener Verdeckposition insbesondere bei einer großen Erstreckung in Fahrzeuglängsrichtung unter Umständen schwierig erzielbar.

Aus der FR 2 802 478 A1 ist ein Hard-Top-Dach bekannt, welches von zwei ein Viergelenk bildenden und karosseriefest angeordneten Armen zwischen einer offenen und einer geschlossenen Position verlagerbar ist. Um eine Steifigkeit des Daches in der geschlossenen Position zu erhöhen, ist ein mit einem Arm verbundener Exzenter vorgesehen, der in der geschlossenen Dachposition mit dem anderen Arm zusammenwirkt. Durch den Exzenter werden in der geschlossenen Dachposition die beiden Arme auseinandergedrückt, wodurch eine Spannung zwischen den beiden Armen induzierbar ist.

Eine ähnliche Ausführung eines Hard-Top-Daches ist aus der DE 603 04 742 T2 bekannt, wobei statt des Exzenters hierbei ein einstellbares Anschlagmittel vorgesehen ist.

Diesen beiden Ausführungen ist gemein, dass eine Steifigkeit des Verdecks durch die Aufbringung einer großen Vorspannkraft erzielt wird, die das gesamte Dach in der geschlossenen Position in der Art einer Feder vorspannt, so dass hierdurch im Betrieb auftretende Bewegungen des Daches, beispielsweise in Form von Vibrationen, reduziert sind.

Es ist Aufgabe der vorliegenden Erfindung, ein Soft-Top-Verdeck eines Cabriolet-Fahrzeugs zu schaffen, bei dem in geschlossener Verdeckposition auf konstruktiv einfache Weise eine ausreichende Steifigkeit auch bei einer großen Erstreckung des Verdecks in Fahrzeuglängsrichtung erzielbar ist.

Diese Aufgabe wird mit einem Verdeck gemäß den Merkmalen des Patentanspruches 1 gelöst.

Es ist ein Soft-Top-Verdeck für ein Cabriolet-Fahrzeug vorgesehen, das mittels eines Verdeckgestänges zwischen einer einen Fahrgastraum zumindest bereichsweise freigebenden offenen Position und einer den Fahrgastraum abdeckenden geschlossenen Position verlagerbar ist, wobei das Verdeckgestänge einen mit einem Hauptlenker, einer Hauptsäule und einem Dachrahmen ausgeführten Viergelenkmechanismus aufweist, wobei der Hauptlenker und die Hauptsäule jeweils in einem Gelenkpunkt mit dem Dachrahmen verbunden sind, wobei ein zur Spannung eines Verdeckbezugs ausgeführter Stoffhaltebügel und ein Verlagerungsmechanismus zur Verlagerung des Stoffhaltebügels von einer den Verdeckbezug spannenden geschlossenen Position in eine mit einem heckseitigen Bereich aufwärts verschwenkten offenen Position unabhängig von dem Viergelenkmechanismus vorgesehen ist, und wobei der Verlagerungsmechanismus eine gelenkig an den Viergelenkmechanismus angebundene Spannstange aufweist.

Erfindungsgemäß wird vorgeschlagen, dass die Spannstange in geschlossener Verdeckposition bei geschlossenem Stoffhaltebügel zur Versteifung des Verdecks insbesondere in einem Abstützbereich an dem Viergelenkmechanismus anliegt, wobei die Spannstange eine Abstützung des Viergelenkmechanismus entgegen einer in Fahrzeughochrichtung nach unten wirkenden Kraft bildet.

Durch die erfindungsgemäße Ausbildung des Soft-Top-Verdecks ist eine Steifigkeit des Verdecks in der geschlossenen Position auch ohne die Aufbringung einer großen Vorspannkraft auf konstruktiv einfache Weise erzielbar, da durch die Spannstange der Viergelenkmechanismus in einem zusätzlichen Abstützbereich mit dem Dachrahmen, insbesondere einer sogenannten Einlage des Dachrahmens, verbunden ist. Der Abstützbereich ist dabei insbesondere beabstandet zu einem Gelenkpunkt angeordnet, in dem die Spannstange an dem Viergelenkmechanismus angebunden ist.

Bei der erfindungsgemäßen Lösung ist eine Verlagerung der Hauptsäule oder des Hauptlenkers in geschlossener Verdeckposition relativ zu dem Dachrahmen in Fahrzeughochrichtung nach unten unter Einwirkung einer äußeren, zumindest bereichsweise nach unten wirkenden Kraft durch das Zusammenwirken der Spannstange mit dem Viergelenkmechanismus erschwert. In geschlossener Verdeckposition wird eine Relativbewegung des Hauptlenkers oder der Hauptsäule gegenüber dem Dachrahmen blockiert, so dass eine Steifigkeit des Verdecks erhöht ist.

Eine äußere, von oben auf das Verdeck wirkende Kraft führt somit im Vergleich zu herkömmlich ausgeführten Verdecken zu keinen oder lediglich geringen Durchbiegungen, so dass auch bei geringem vorliegenden Bauraum und/oder bei in Leichtbauweise ausgeführten Bauteilen eine gewünscht große Steifigkeit des Verdecks auf konstruktiv einfache Weise erzielbar ist.

Die Spannstange kann Teil einer zweiteilig, dreiteilig oder mehrteilig ausgeführten Spanneinrichtung des Verlagerungsmechanismus für den Stoffhaltebügel sein, wobei eine weitere Spannstange mit dem Stoffhaltebügel gelenkig verbunden ist und direkt oder über die Zwischenschaltung einer oder mehrerer weiterer Spannstangen mit der an dem Viergelenkmechanismus angelenkten Spannstange zusammenwirkt.

Es kann vorgesehen sein, dass das Soft-Top-Verdeck nach einer Überführung des Stoffhaltebügels in die insbesondere zur Ermöglichung einer Öffnungsbewegung eines Verdeckkastendeckels aufgeschwenkte offene Position zurück in die geschlossene Position oder eine der geschlossenen Position ähnliche Position verschwenkt wird, bevor der Stoffhaltebügel mit dem restlichen Verdeck insbesondere in einen heckseitigen Ablageraum verlagert wird.

Alternativ hierzu kann es auch vorgesehen sein, dass das Verdeck ausgehend von dem sich in der Öffnungsstellung befindlichen Stoffhaltebügel gemeinsam mit dem restlichen Verdeck in den heckseitigen Ablageraum verlagert wird, wobei hierdurch eine Zeit zum Überführen des Verdecks zwischen der offenen Position und der geschlossenen Position vorteilhafterweise gering ist.

Um eine möglichst günstige Abstützung bei geschlossenem Verdeck zu erzielen, kann die Spannstange in geschlossener Verdeck- und Stoffhaltebügelposition zumindest bereichsweise bezüglich einer Verdeckhochrichtung von unten an dem Viergelenkmechanismus anliegen.

Wenn die Spannstange bei einer Schließbewegung des Stoffhaltebügels mit einem der Anlenkung an dem Viergelenkmechanismus abgewandten Endbereich aufwärts verschwenkt ist, ist ein Zusammenwirken der Spannstange mit dem Viergelenkmechanismus in geschlossener Verdeck- und Stoffhaltebügelposition mit einer damit einhergehenden Erhöhung der Steifigkeit des Verdecks auf konstruktiv einfache Weise erzielbar.

Um auf einfache Weise eine gewünscht große Steifigkeit des Soft-Top-Verdecks in der geschlossenen Verdeck- und Stoffhaltebügelposition zu erzielen, kann bei einer vorteilhaften Ausführung in geschlossener Verdeckposition ein Gelenkpunkt, in dem die Spannstange an dem Viergelenkmechanismus angebunden ist, in Verdecklängsrichtung vor dem Gelenkpunkt angeordnet sein, in dem die Hauptsäule mit dem Dachrahmen verbunden ist. Vorzugsweise ist der Gelenkpunkt, in dem die Spannstange an dem Viergelenkmechanismus angebunden ist, dabei in Verdecklängsrichtung hinter dem Gelenkpunkt, in dem der Hauptlenker mit dem Dachrahmen verbunden ist, angeordnet.

Die Spannstange kann in einem Gelenkpunkt an dem Hauptlenker oder an der Hauptsäule angelenkt sein.

Bei einer Ausführung der Erfindung kann die Spannstange ein Abstützelement aufweisen, welches in geschlossener Verdeckposition bei geschlossenem Stoffhaltebügel zur Versteifung des Verdecks durch ein Zusammenwirken des Viergelenkmechanismus mit dem Dachrahmen, insbesondere der Einlage des Dachrahmens, an einem Abstützelement des Viergelenkmechanismus anliegt. Hierdurch ist eine Verlagerung der Hauptsäule oder des Hauptlenkers in geschlossener Verdeckposition relativ zu dem Dachrahmen in Fahrzeughochrichtung nach unten auf einfache Weise erschwert.

Vorzugsweise bildet das Abstützelement der Spannstange einen Anschlag für das Abstützelement des Viergelenkmechanismus, so dass sich der Hauptlenker oder die Hauptsäule des Viergelenkmechanismus durch das Zusammenwirken der Abstützelemente in geschlossener Verdeckposition an dem Dachrahmen abstützt.

Bei einer Ausführungsform des Soft-Top-Verdecks kann die Spannstange derart angelenkt sein, dass das Abstützelement der Spannstange bei einer Öffnungsbewegung des Stoffhaltebügels außer Eingriff mit dem Abstützelement des Viergelenkmechanismus gelangt und insbesondere bei der Überführung des Stoffhaltebügels von der offenen Position in die geschlossene Position in Eingriff mit dem Abstützelement kommt.

Das Abstützelement der Spannstange ist vorzugsweise integral mit der Spannstange ausgeführt, es kann bei einer alternativen Ausführung nach der Erfindung aber auch als separates Element ausgeführt sein.

Bei einer einfachen Ausführung der Erfindung ist das Abstützelement der Spannstange als Ausleger der Spannstange ausgeführt, der in geschlossener Verdeck- und Stoffhaltebügelposition das Abstützelement des Viergelenkmechanismus zumindest bereichsweise untergreift und insbesondere von unten an dem Abstützelement des Viergelenkmechanismus anliegt.

Das Abstützelement des Viergelenkmechanismus ist vorzugsweise an dem Hauptlenker oder der Hauptsäule angeordnet bzw. integral mit einem dieser Bauteile ausgeführt.

Bei einer vorteilhaften Ausführung des Soft-Top-Verdecks ist das Abstützelement des Viergelenkmechanismus als separates Bauteil ausgeführt, das mit dem Hauptlenker oder der Hauptsäule verbunden ist.

Um eine beispielsweise aufgrund von vorliegenden Toleranzen erforderliche Anpassung nach einer Montage des Soft-Top-Verdecks nach der Erfindung auf einfache Weise durchführen zu können, kann eine Verstelleinrichtung vorgesehen sein, mittels welcher das Bauteil einstellbar mit dem Hauptlenker oder der Hauptsäule verbunden ist.

Das Abstützelement der Spannstange kann als Zapfen ausgeführt sein, der in geschlossener Verdeck- und Stoffhaltebügelposition in eine Ausnehmung des Abstützelements des Viergelenkmechanismus eingreift.

Weitere Vorteile und vorteilhafte Ausführungsformen des erfindungsgemäßen Soft-Top-Verdecks ergeben sich aus den Patentansprüchen und dem nachfolgend unter Bezugnahme auf die Zeichnung prinzipmäßig beschriebenen Ausführungsbeispiel.

Es zeigt:
- Fig. 1: eine vereinfachte dreidimensionale Ansicht eines Cabriolet-Fahrzeugs mit einem einen Verdeckbezug aufweisenden Soft-Top-Verdeck in einer geschlossenen Position.
- Fig. 2: eine vereinfachte dreidimensionale Darstellung des Soft-Top-Verdecks gemäß Fig. 1 in Alleinstellung, wobei das Verdeck ohne den Verdeckbezug in einer einen Fahrgastraum überspannenden geschlossenen Position gezeigt ist;
- Fig. 3: eine der Fig. 2 entsprechende Ansicht des Verdecks, wobei ein Stoffhaltebügel des Verdecks in einer aufgeschwenkten Position gezeigt ist;
- Fig. 4: eine den Fig. 2 und Fig. 3 entsprechende Ansicht des Verdecks in einer den Fahrgastraum freigebenden offenen Position, in der das Verdeck in einem Stauraum abgelegt ist;
- Fig. 5: eine vereinfachte dreidimensionale Ansicht eines Ausschnitts des Verdecks in der geschlossenen Position gemäß Fig. 2, wobei eine an einem Hauptlenker angelenkte Spannstange näher ersichtlich ist;
- Fig. 6: eine Detailansicht des Verdecks und des Stoffhaltebügels in der geschlossenen Position, wobei das Zusammenwirken eines Abstützelements der Spannstange mit einem Abstützelement des Hauptlenkers gezeigt ist; und
- Fig. 7: eine Fig. 6 entsprechende Detailansicht des Verdecks in geschlossener Position, wobei der Stoffhaltebügel geringfügig in Richtung seiner aufgeschwenkten Position verlagert ist und das Abstützelement der Spannstange nicht in Kontakt mit dem Abstützelement des Hauptlenkers ist.

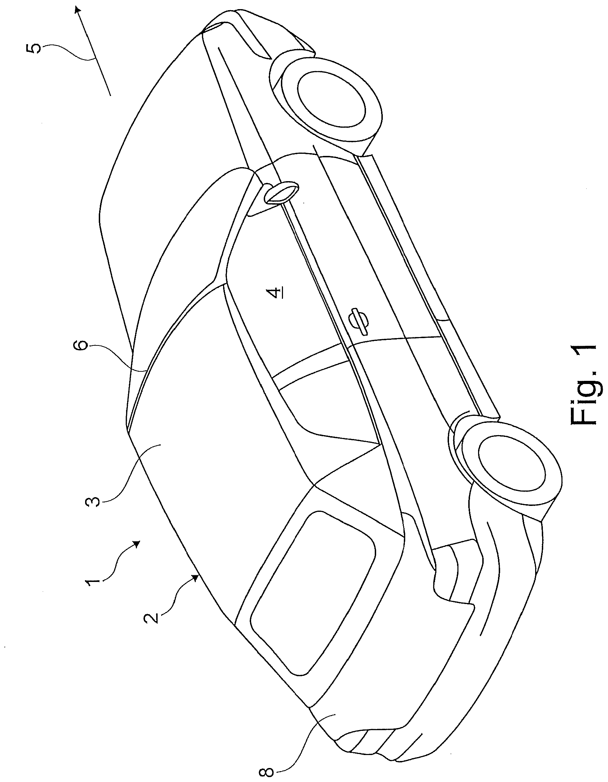

In Fig. 1 ist ein Cabriolet-Fahrzeug 1 mit einem als Soft-Top ausgeführten Verdeck 2 gezeigt. Das von einem Verdeckbezug 3 überspannte Verdeck 2 ist in einer geschlossenen Position gezeigt, in der das Verdeck 2 einen Fahrgastraum 4 abdeckt. Das Verdeck 2 erstreckt sich von einem in Fahrtrichtung 5 in einem vorderen Bereich angeordneten Windschutzscheibenrahmen 6, an dem das Verdeck 2 insbesondere mittels einer Verriegelungseinrichtung verriegelbar ist, bis zu einem heckseitigen Stoffhaltebügel 7 bzw. Spannbügel, der in der geschlossenen Position auf einem Verdeckkastendeckel 8 und/oder einem Heckdeckel aufliegt und dabei den Verdeckbezug 3 spannt.

Das Verdeck 2 ist aus der in Fig. 1 gezeigten geschlossenen Position mittels eines Verdeckgestänges 9 in eine den Fahrgastraum 4 zumindest teilweise freigebende offene Position verlagerbar, in der das Verdeck 2 in einem rückwärtigen Fahrzeugbereich vorliegend in einem von dem Verdeckkastendeckel 8 abgedeckten Stauraum 10 abgelegt ist. Dieser kann bei geschlossenem Verdeck 2 insbesondere zusätzlich als Kofferraum nutzbar sein.

Der Verdeckkastendeckel 8 ist zumindest zur Freigabe einer Durchtrittsöffnung für das Verdeck 2 in einem mit einem in Fahrtrichtung 5 vorderen Bereich aufschwenkbar. Diese Öffnungsbewegung kann eine reine Schwenkbewegung oder eine kombinierte translatorische und rotatorische Bewegung sein.

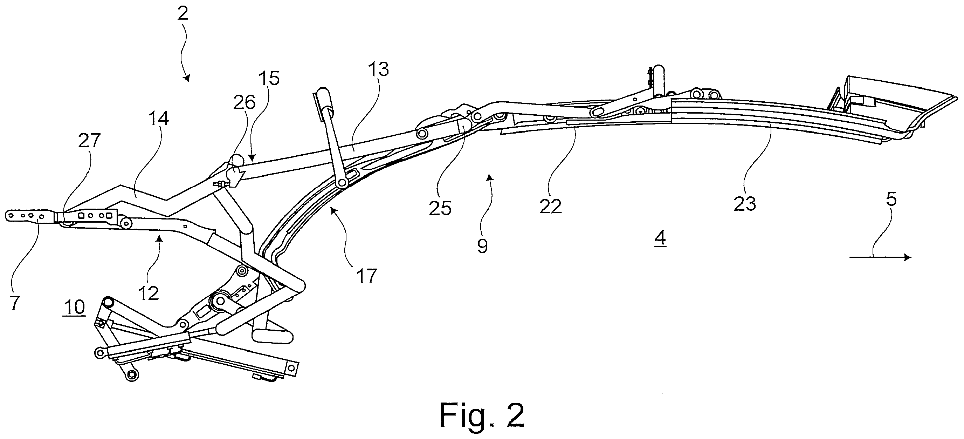

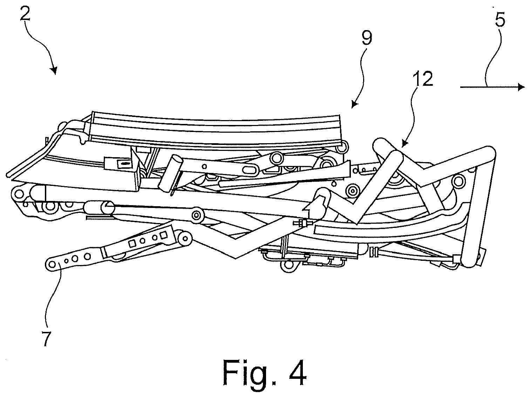

In Fig. 2 bis Fig. 7 ist das Verdeck 2 ohne den Verdeckbezug gezeigt. Das Verdeckgestänge 9 weist beidseits jeweils einen Viergelenkmechanismus 17 mit einem Hauptlenker 18 und einer Hauptsäule 19 auf, die einenends jeweils an einem karosseriefest festgelegten Hauptlager 20 des Verdecks 2 angeordnet sind und mit einem dem Hauptlager 20 abgewandten Bereich jeweils mit einem in geschlossener Verdeckposition der Hauptsäule 19 vorgelagerten Dachrahmen 21 bzw. einer sogenannten Einlage 22 des Dachrahmens 21 verbunden sind.

Vorliegend ist ein weiterer, in geschlossener Verdeckposition vor dem Dachrahmen 21 angeordneter Dachrahmen 23 vorgesehen, der in einem vorderen Bereich eine Dachspitze 24 aufweist, mittels der das Verdeck 2 an dem Windschutzscheibenrahmen 6 festlegbar ist.

Das Verdeck 2 ist somit hier im Wesentlichen dreiteilig ausgeführt und in einer Z-förmigen Bewegung in den Stauraum 10 verlagerbar. Das Verdeck 2 kann grundsätzlich auch zweiteilig mit nur einem der Hauptsäule 19 vorgelagerten Dachrahmen 21 oder vier- oder mehrteilig mit weiteren dem Dachrahmen 23 vorgelagerten Dachrahmen ausgeführt sein, wobei eine Verlagerungsbewegung zur Überführung des Verdecks 2 zwischen der geschlossenen Position und der offenen Position grundsätzlich beliebig wählbar ist.

Es ist weiterhin ein Verlagerungsmechanismus 12 zur Verlagerung des Stoffhaltebügels 7 zwischen der geschlossenen, auf dem Verdeckkastendeckel 8 aufliegenden Position und einer mit dem heckseitigen Bereich aufgeschwenkten Position, in der der Verdeckkastendeckel 8 zwischen der geschlossenen Position und der offenen Position verlagerbar ist, vorgesehen. Der Stoffhaltebügel 7 ist hierbei gelenkig mit dem Verdeckgestänge 9, insbesondere dem Hauptlenker 18 oder der Hauptsäule 19 des Viergelenkmechanismus 17 verbunden. Der Verlagerungsmechanismus 12 weist vorliegend eine mit zwei Spannstangen 13, 14 ausgeführte Spanneinrichtung 15 bzw. ein Totpunktgestänge auf, wobei eine erste Spannstange 13 in einem ersten Gelenkpunkt 25 mit dem Hauptlenker 18 verbunden ist. In einem dem ersten Gelenkpunkt 25 abgewandten Bereich ist die erste Spannstange 13 in einem zweiten Gelenkpunkt 26 mit der zweiten Spannstange 14 verbunden, die wiederum in einem dem Gelenkpunkt 26 abgewandten Bereich in einem dritten Gelenkpunkt 27 mit dem Stoffhaltebügel 7 verbunden ist.

Der erste Gelenkpunkt 25 ist in geschlossener Verdeckposition in Fahrtrichtung 5 vor einem Gelenkpunkt 30, in dem die Hauptsäule 19 an der Einlage 22 angebunden ist, und hinter einem Gelenkpunkt 31, in dem der Hauptlenker 18 mit der Einlage 22 verbunden ist, angeordnet.

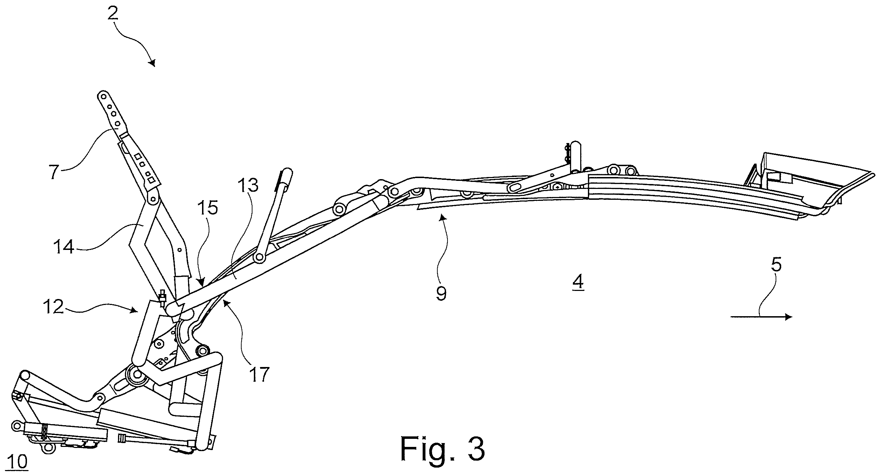

Zu Beginn einer Verdecköffnungsbewegung ist der Stoffhaltebügel 7, der in geschlossener Verdeckposition gemäß Fig. 1 und Fig. 2 von oben auf dem Verdeckkastendeckel 8 aufliegt, zunächst mit seinem hinteren Ende aufzuschwenken, um den Verdeckkastendeckel 8 zur Freigabe des Stauraums 10 öffnen zu können. Der Stoffhaltebügel 7 ist hierzu mittels des Verlagerungsmechanismus 12 unabhängig von dem Viergelenkmechanismus 17 von der geschlossenen Position in die offene Position verlagerbar, wobei die erste Spannstange 13, wie in Fig. 3 ersichtlich ist, hierbei mit einem dem ersten Gelenkpunkt 25 abgewandten Ende nach unten verschwenkt. Bei sich in der offenen Position befindlichem Stoffhaltebügel 7 ist der Verdeckkastendeckel 8 in seine den Stauraum 10 freigebende Position verlagerbar und das Verdeck 2 kann insgesamt in den Stauraum 10 verlagert werden.

Bei der gezeigten Ausführung wird der Stoffhaltebügel 7 ausgehend von der offenen Position gemeinsam mit dem restlichen Verdeck 2 in den Stauraum 10 verlagert. Bei einer alternativen Ausführung kann es vorgesehen sein, dass der Stoffhaltebügel 7 zunächst zurück in seine geschlossene Position oder eine hierzu nahe Position verlagert wird, bevor das gesamte Verdeck 2 in den Stauraum 10 verlagert wird.

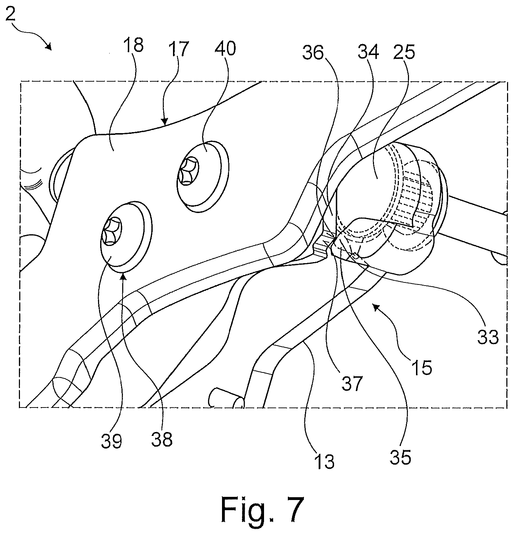

Bei einer Schließbewegung laufen die oben beschriebenen Schritte in umgekehrter Reihenfolge ab. In Fig. 7 ist dabei ein Zustand kurz vor Erreichen der geschlossenen Position des Stoffhaltebügels 7 bei ansonsten bereits in der geschlossenen Position befindlichem Verdeck 2 gezeigt. Hierbei ist ersichtlich, dass die erste Spannstange 13 ein hier integral mit der ersten Spannstange 13 ausgeführtes Abstützelement 33 aufweist, welches zum Zusammenwirken mit einem Abstützelement 34 des Hauptlenkers 18 ausgeführt ist und einen Anschlag für das Abstützelement 34 des Hauptlenkers 18 bildet. Das Abstützelement 34 des Hauptlenkers 18 ist vorliegend ein separates Bauteil, das über eine hier mit zwei Schraubverbindungen 39, 40 ausgeführte Verstelleinrichtung 38 einstellbar an dem Hauptlenker 18 angeordnet ist.

Das Abstützelement 33 der ersten Spannstange 13 und das Abstützelement 34 des Hauptlenkers 18 sind derart aufeinander abgestimmt, dass das Abstützelement 33 der ersten Spannstange 13 bei einer Schließbewegung des Stoffhaltebügels 7 zumindest teilweise von unten in einem Abstützbereich 32 in Anlage mit dem Abstützelement 34 des Hauptlenkers 18 kommt und insbesondere flächig an diesem anliegt. Das Abstützelement 33 der ersten Spannstange 13 weist hierzu einen nasenförmigen Ausleger 35 auf, der mittels einer Außenkontur 36 mit einer hierauf abgestimmten Außenkontur 37 des Abstützelements 34 des Hauptlenkers 18 zusammenwirkt.

Bei geschlossenem Stoffhaltebügel 7 liegt das Abstützelement 33 der ersten Spannstange 13 in Fahrzeughochrichtung zumindest bereichsweise von unten und gegebenenfalls zusätzlich in Fahrzeuglängsrichtung an der Außenkontur 36 des Abstützelements 34 des Hauptlenkers 18 an. Hierdurch wird ein Verkeilen bzw. Blockieren auf Zug und eine sichere und stabile Abstützung des Hauptlenkers 18 gegenüber der Einlage 22 des Dachrahmens 21 mittels der ersten Spannstange 13 erzielt. Bei geschlossenem Stoffhaltebügel 7 ist durch die Spanneinrichtung 15 eine Verlagerungsbewegung des Hauptlenkers 18 nach unten blockiert und das Verdeck 2, insbesondere das Verdeckgestänge 9, auf konstruktiv einfache Weise versteift. Hierfür ist vorteilhafterweise kein separater Antrieb erforderlich, da die Bewegung der Spannstange 13 hierzu ausgenutzt wird.

Eine Verbiegung bzw. Durchbiegung des Verdecks 2 durch eine beispielsweise im Betrieb auftretende, nach unten - entsprechend dem Pfeil 42 - wirkende Kraft wird somit vorteilhafterweise auch bei einem eine große Längenerstreckung aufweisenden und/oder in Leichtbauweise ausgeführten Verdeck 2 reduziert.

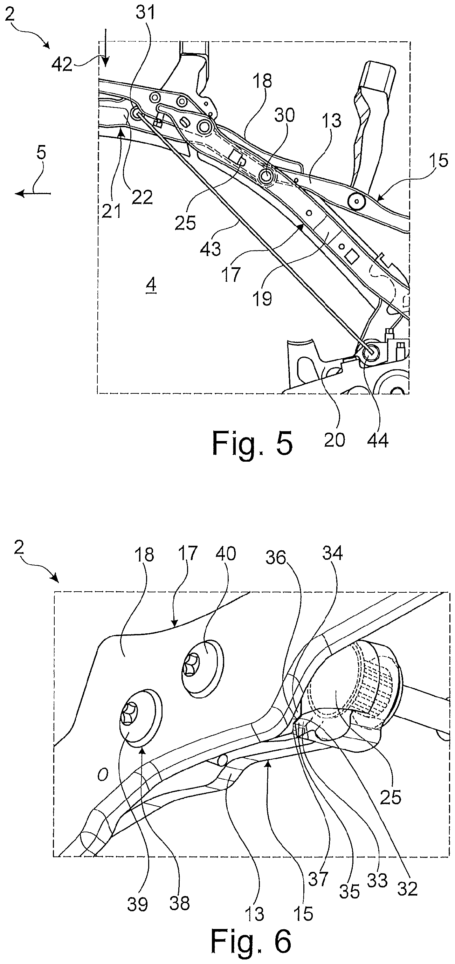

In Fig. 5 ist eine kinematische Abstützung 43 gezeigt, die sich durch eine Verbindung des Gelenkpunkts 30 des Hauptlenkers 18 mit der Einlage 22 und einem Anlenkpunkt 44 des Hauptlenkers 18 im Hauptlager 20 ergibt.

Zu Beginn einer Verdecköffnungsbewegung wird der Stoffhaltebügel 7 mit seinem heckseitigen Ende nach oben verschwenkt, wobei hierbei das Abstützelement 33 der ersten Spannstange 13 von dem Abstützelement 34 des Hauptlenkers 18 nach unten wegbewegt wird und hierdurch eine Verlagerungsbewegung des Verdecks 2 von der geschlossenen Position in Richtung der offenen Position freigegeben wird.

## Patentansprüche

1. Soft-Top-Verdeck (2) für ein Cabriolet-Fahrzeug (1), das mittels eines Verdeckgestänges (9) zwischen einer einen Fahrgastraum (4) zumindest bereichsweise freigebenden offenen Position und einer den Fahrgastraum (4) abdeckenden geschlossenen Position verlagerbar ist,
wobei das Verdeckgestänge (9) einen mit einem Hauptlenker (18), einer Hauptsäule (19) und einem Dachrahmen (21) ausgeführten Viergelenkmechanismus (17) aufweist,
wobei der Hauptlenker (18) und die Hauptsäule (19) jeweils in einem Gelenkpunkt (31 bzw. 30) mit dem Dachrahmen (21) verbunden sind, und wobei ein zur Spannung eines Verdeckbezugs (3) ausgeführter Stoffhaltebügel (7) und ein Verlagerungsmechanismus (12) zur Verlagerung des Stoffhaltebügels (7) zwischen einer den Verdeckbezug (3) spannenden geschlossenen Position und einer mit einem heckseitigen Bereich aufwärts verschwenkten offenen Position unabhängig von dem Viergelenkmechanismus (17) vorgesehen ist,
wobei der Verlagerungsmechanismus (12) eine gelenkig an den Viergelenkmechanismus (17) angebundene Spannstange (13) aufweist, **dadurch gekennzeichnet,**
**dass** die Spannstange (13) in geschlossener Verdeckposition bei geschlossenem Stoffhaltebügel (7) zur Versteifung des Verdecks (2) an dem Viergelenkmechanismus (17) anliegt, wobei die Spannstange (13) eine Abstützung des Viergelenkmechanismus (17) entgegen einer in Fahrzeughochrichtung nach unten wirkenden Kraft bildet.

2. Soft-Top-Verdeck nach Anspruch 1, **dadurch gekennzeichnet, dass** die Spannstange (13) in geschlossener Verdeck- und Stoffhaltebügelposition zumindest bereichsweise bezüglich einer Verdeckhochrichtung von unten an dem Hauptlenker (18) oder der Hauptsäule (19) des Viergelenkmechanismus (17) anliegt.

3. Soft-Top-Verdeck nach einem der Ansprüche 1 oder 2, **dadurch gekennzeichnet, dass** die Spannstange (13) bei einer Schließbewegung des Stoffhaltebügels (7) mit einem der Anlenkung an dem Viergelenkmechanismus (17) abgewandten Endbereich aufwärts verschwenkt ist.

4. Soft-Top-Verdeck nach einem der Ansprüche 1 bis 3, **dadurch gekennzeichnet, dass** in geschlossener Verdeckposition ein Gelenkpunkt (25), in dem die Spannstange (13) an dem Viergelenkmechanismus (17) angebunden ist, in Verdecklängsrichtung vor dem Gelenkpunkt (30) angeordnet ist, in dem die Hauptsäule (19) mit dem Dachrahmen (21) verbunden ist.

5. Soft-Top-Verdeck nach einem der Ansprüche 1 bis 4, **dadurch gekennzeichnet, dass** die Spannstange (13) in einem Gelenkpunkt (25) an dem Hauptlenker (18) angelenkt ist.

6. Soft-Top-Verdeck nach einem der Ansprüche 1 bis 5, **dadurch gekennzeichnet, dass** die Spannstange (13) in einem Gelenkpunkt an der Hauptsäule (19) angelenkt ist.

7. Soft-Top-Verdeck nach einem der Ansprüche 1 bis 6, **dadurch gekennzeichnet, dass** die Spannstange (13) ein Abstützelement (33) aufweist, welches in geschlossener Verdeckposition bei geschlossenem Stoffhaltebügel (7) an einem Abstützelement (34) des Viergelenkmechanismus (17) anliegt.

8. Soft-Top-Verdeck nach Anspruch 7, **dadurch gekennzeichnet, dass** das Abstützelement (33) der Spannstange (13) einen Anschlag für das Abstützelement (34) des Viergelenkmechanismus (17) bildet.

9. Soft-Top-Verdeck nach einem der Ansprüche 7 oder 8, **dadurch gekennzeichnet, dass** die Spannstange (13) derart angelenkt ist, dass das Abstützelement (33) der Spannstange (13) bei einer Öffnungsbewegung des Stoffhaltebügels (7) außer Eingriff mit dem Abstützelement (34) des Viergelenkmechanismus (17) gelangt.

10. Soft-Top-Verdeck nach einem der Ansprüche 7 bis 9, **dadurch gekennzeichnet, dass** das Abstützelement (33) der Spannstange (13) integral mit der Spannstange (13) ausgeführt ist.

11. Soft-Top-Verdeck nach einem der Ansprüche 7 bis 10, **dadurch gekennzeichnet, dass** das Abstützelement (33) der Spannstange (13) als Ausleger (35) der Spannstange (13) ausgeführt ist, der in geschlossener Verdeck- und Stoffhaltebügelposition das Abstützelement (34) des Viergelenkmechanismus (17) zumindest bereichsweise untergreift.

12. Soft-Top-Verdeck nach einem der Ansprüche 7 bis 11, **dadurch gekennzeichnet, dass** das Abstützelement (34) des Viergelenkmechanismus (17) an dem Hauptlenker (18) oder der Hauptsäule (19) angeordnet ist.

13. Soft-Top-Verdeck nach einem der Ansprüche 7 bis 12, **dadurch gekennzeichnet, dass** das Abstützelement (34) des Viergelenkmechanismus (17) als separates Bauteil ausgeführt ist, das mit dem Hauptlenker (18) oder der Hauptsäule (19) verbunden ist.

14. Soft-Top-Verdeck nach Anspruch 13, **dadurch gekennzeichnet, dass** eine Verstelleinrichtung (38) vorgesehen ist, mittels welcher das Bauteil (34) einstellbar mit dem Hauptlenker (18) oder der Hauptsäule (19) verbunden ist.

15. Soft-Top-Verdeck nach einem der Ansprüche 7 bis 14, **dadurch gekennzeichnet, dass** das Abstützelement (33) der Spannstange (13) als Zapfen ausgeführt ist, der in geschlossener Verdeck- und Stoffhaltebügelposition in eine Ausnehmung des Abstützelements (34) des Viergelenkmechanismus (17) eingreift.

## Claims

1. A soft top hood (2) for a convertible vehicle (1), said soft top hood (2) being displaceable by means of a hood linkage (9) between an open position at least partially uncovering a passenger compartment (4) and a closed position covering the passenger compartment (4),
wherein the hood linkage (9) comprises a four-bar linkage (17) configured with a main link (18), a main pillar (19) and a roof frame (21),
wherein the main link (18) and the main pillar (19) are each connected to the roof frame (21) at a point of articulation (31 and 30, respectively), and wherein a fabric retaining bracket (7) adapted to tension a hood cover (3) and a displacement mechanism (12) for displacing the fabric retaining bracket (7) between a closed position tensioning the hood cover (3) and an open position pivoted upward with a rear portion independently of the four-bar linkage (17) are provided,
wherein the displacement mechanism (12) comprises a tension rod (13) articulated to the four-bar linkage (17), **characterised in that**
the tension rod (13), in the closed hood position with the fabric retaining bracket (7) closed, contacts the four-bar linkage (17) in order to stiffen the hood (2), with the tension rod (13) forming a support for the four-bar linkage (17) counter to a force acting downwards in the vertical direction of the vehicle.

2. The soft top hood according to claim 1, **characterised in that**, when the hood and the fabric retaining bracket are in the closed position, the tension rod (13) contacts the main link (18) or the main pillar (19) of the four-bar linkage (17), at least partly, from below with respect to a vertical direction of the hood.

3. The soft top hood according to any one of claims 1 or 2, **characterised in that** the tension rod (13) is pivoted upwards with an end region facing away from the articulation on the four-bar linkage (17) during a closing movement of the fabric retaining bracket (7).

4. The soft top hood according to any one of claims 1 to 3, **characterised in that**, in the closed hood position, a point of articulation (25), at which the tension rod (13) is connected to the four-bar linkage (17), is arranged in front of the point of articulation (30), at which the main pillar (19) is connected to the roof frame (21), in the longitudinal direction of the hood.

5. The soft top hood according to any one of claims 1 to 4, **characterised in that** the tension rod (13) is articulated to the main link (18) at a point of articulation (25).

6. The soft top hood according to any one of claims 1 to 5, **characterised in that** the tension rod (13) is articulated to the main pillar (19) at a point of articulation.

7. The soft top hood according to any one of claims 1 to 6, **characterised in that** the tension rod (13) has a support element (33) which, in the closed hood position, contacts a support element (34) of the four-bar linkage (17) when the fabric retaining bracket (7) is closed.

8. The soft top hood according to claim 7, **characterised in that** the support element (33) of the tension rod (13) forms a stop for the support element (34) of the four-bar linkage (17).

9. The soft top hood according to any one of claims 7 or 8, **characterised in that** the tension rod (13) is articulated such that the support member (33) of the tension rod (13) disengages from the support member (34) of the four-bar linkage (17) upon an opening movement of the fabric retaining bracket (7).

10. The soft top hood according to any one of claims 7 to 9, **characterised in that** the support member (33) of the tension rod (13) is integral with the tension rod (13).

11. The soft top hood according to any one of claims 7 to 10, **characterised in that** the support element (33) of the tension rod (13) is in the form of an extension arm (35) of the tension rod (13) which engages at least partly under the support element (34) of the four-bar linkage (17), when the hood and the fabric retaining bracket are in the closed position.

12. The soft top hood according to any one of claims 7 to 11, **characterised in that** the support element (34) of the four-bar linkage (17) is arranged on the main link (18) or the main pillar (19).

13. The soft top hood according to any one of claims 7 to 12, **characterised in that** the support element (34) of the four-bar linkage (17) is designed as a separate component connected to the main link (18) or the main pillar (19).

14. The soft top hood according to claim 13, **characterised in that** an adjusting means (38) is provided by means of which the component (34) is adjustably connected to the main link (18) or the main pillar (19).

15. The soft top hood according to any one of claims 7 to 14, **characterised in that** the support element (33) of the tension bar (13) is in the form of a pin which engages in a recess in the support element (34) of the four-bar linkage (17) when the hood and the fabric retaining bracket are in the closed position.

## Revendications

1. Capote souple (2) pour un véhicule cabriolet (1), qui peut être déplacée au moyen d'une tringlerie de capote (9) entre une position ouverte découvrant au moins partiellement un habitacle (4) et une position fermée recouvrant ledit habitacle (4),
où la tringlerie de capote (9) comprend un mécanisme à quatre articulations (17) réalisé avec un bras principal (18), un montant principal (19) et un cadre de toit (21),
où le bras principal (18) et le montant principal (19) sont chacun reliés au cadre de toit (21) en un point d'articulation (31 et 30 respectivement), et où un étrier de retenue (7) adapté pour serrer un recouvrement de capote (3) et un mécanisme de déplacement (12) pour déplacer l'étrier de retenue (7) entre une position fermée serrant le recouvrement de capote (3) et une position ouverte pivotée vers le haut avec une partie latérale arrière indépendamment du mécanisme à quatre articulations (17) sont prévus,
le mécanisme de déplacement (12) comprenant une tige de serrage (13) reliée de manière articulée au mécanisme à quatre articulations (17), **caractérisée en ce que** que la tige de serrage (13), dans la position fermée de la capote avec l'étrier de retenue (7) fermé, s'appuie contre le mécanisme à quatre articulations (17) afin de raidir la capote (2), la tige de serrage (13) formant un support pour le mécanisme à quatre articulations (17) contre une force agissant vers le bas dans la direction verticale du véhicule.

2. Capote souple selon la revendication 1, **caractérisée en ce que** la tige de serrage (13), dans la position fermée de la capote et de l'étrier de retenue, s'appuie par en dessous, par rapport à une direction verticale de la capote, contre le bras principal (18) ou le montant principal (19) du mécanisme à quatre articulations (17), au moins dans certaines régions.

3. Capote souple selon l'une quelconque des revendications 1 ou 2, **caractérisée en ce que** la tige de serrage (13) est pivotée vers le haut avec une région d'extrémité opposée à l'articulation sur le mécanisme à quatre articulations (17) lors d'un mouvement de fermeture de l'étrier de retenue (7).

4. Capote souple selon l'une quelconque des revendications 1 à 3, **caractérisée en ce que**, dans la position fermée de la capote, un point d'articulation (25) au niveau duquel la tige de serrage (13) est reliée au mécanisme à quatre articulations (17) est disposé, dans la direction longitudinale de la capote, devant le point d'articulation (30) au niveau duquel le montant principal (19) est relié au cadre de toit (21).

5. Capote souple selon l'une quelconque des revendications 1 à 4, **caractérisée en ce que** la tige de serrage (13) est articulée sur le bras principal (18) en un point d'articulation (25).

6. Capote souple selon l'une quelconque des revendications 1 à 5, **caractérisée en ce que** la tige de serrage (13) est articulée sur le montant principal (19) en un point d'articulation.

7. Capote souple selon l'une quelconque des revendications 1 à 6, **caractérisée en ce que** la tige de serrage (13) comporte un élément de support (33) qui, dans la position fermée de la capote lorsque l'étrier de retenue (7) est fermé, repose sur un élément de support (34) du mécanisme à quatre articulations (17).

8. Capote souple selon la revendication 7, **caractérisée en ce que** l'élément de support (33) de la tige de serrage (13) constitue une butée pour l'élément de support (34) du mécanisme à quatre articulations (17).

9. Capote souple selon l'une quelconque des revendications 7 ou 8, **caractérisée en ce que** la tige de serrage (13) est articulée de telle sorte que l'élément de support (33) de la tige de serrage (13) se désengage de l'élément de support (34) du mécanisme à quatre articulations (17) lors d'un mouvement d'ouverture de l'étrier de retenue (7).

10. Capote souple selon l'une quelconque des revendications 7 à 9, **caractérisée en ce que** l'élément de support (33) de la tige de serrage (13) est solidaire de la tige de serrage (13).

11. Capote souple selon l'une quelconque des revendications 7 à 10, **caractérisée en ce que** l'élément de support (33) de la tige de serrage (13) est réalisé sous la forme d'un bras (35) de la tige de serrage (13) qui, en position fermée de la capote et de l'étrier de retenue, vient en prise au moins partiellement sous l'élément de support (34) du mécanisme à quatre articulations (17).

12. Capote souple selon l'une quelconque des revendications 7 à 11, **caractérisée en ce que** l'élément de support (34) du mécanisme à quatre articulations (17) est disposé sur le bras principal (18) ou le montant principal (19).

13. Capote souple selon l'une quelconque des revendications 7 à 12, **caractérisée en ce que** l'élément de support (34) du mécanisme à quatre articulations (17) est réalisé sous forme d'un composant séparé relié au bras principal (18) ou au montant principal (19).

14. Capote souple selon la revendication 13, **caractérisée en ce qu'**il est prévu un dispositif de réglage (38) au moyen duquel le composant (34) est relié de manière réglable au bras principal (18) ou au montant principal (19).

15. Capote souple selon l'une quelconque des revendications 7 à 14, **caractérisée en ce que** l'élément de support (33) de la tige de serrage (13) est réalisé sous forme d'un tenon qui vient en prise dans un évidement de l'élément de support (34) du mécanisme à quatre articulations (17) lorsque la capote et l'étrier de retenue sont en position fermée.
